# EUROPÄISCHE PATENTSCHRIFT

(11) **EP 2 852 500 B1**
(45) Veröffentlichungstag und Bekanntmachung des Hinweises auf die Patenterteilung: **11.07.2018**
(21) Anmeldenummer: 13724235.0
(22) Anmeldetag: 17.05.2013
(51) Int. Cl.: B60C 11/12

(54) **LAUFSTREIFENPROFIL EINES FAHRZEUGLUFTREIFENS**
TREAD PROFILE OF A VEHICLE PNEUMATIC TYRE
SCULPTURE DE BANDE DE ROULEMENT D'UN PNEUMATIQUE DE VÉHICULE

(30) Priorität: 22.05.2012 DE 102012104403
(43) Veröffentlichungstag der Anmeldung: 01.04.2015
(73) Patentinhaber: Continental Reifen Deutschland GmbH, 30165 Hannover (DE)
(72) Erfinder: FERNANDEZ, Tomas, 30177 Hannover (DE); GONCALVES ANKIEWICZ, Amélia Olga, 30559 Hannover (DE); POKUTTA-PASKALEVA, Anastassia, 30306 Atlanta (US); WÜST, Alexander, 30926 Seelze (DE); BUCHINGER, Thomas, 30974 Wennigsen (DE); RITTWEGER, Stefan, 30163 Hannover (DE); DOBCZYK, Klaudia, 30419 Hannover (DE)
(74) Vertreter: Finger, Karsten
(86) Internationale Anmeldenummer: PCT/EP2013/060223
(87) Internationale Veröffentlichungsnummer: WO 2013/174737

(56) Entgegenhaltungen:
- JP-A- 2005 262 973
- JP-A- 2005 329 793
- US-A1- 2010 084 062
- US-A1- 2011 120 610
- US-A1- 2012 090 749

## Beschreibung

Die Erfindung betrifft ein Laufstreifenprofil eines Fahrzeugreifens mit Profilpositiven wie Profilblöcken oder Laufstreifenbändern, welche Feineinschnitte aufweisen, wobei die Breite eines Feineinschnittes durch zwei parallel zueinander angeordnete Feineinschnittwände begrenzt ist, welche ein Leervolumen zwischen sich einschließen und wobei die Feineinschnittwände Ausbuchtungen aufweisen, welche das Leervolumen des Feineinschnittes an der Stelle der Ausbuchtung erhöht und welche in axialer Richtung sowie in radialer Richtung verteilt an der Feineinschnittwand angeordnet sind, wobei beide Feineinschnittwände Ausbuchtungen aufweisen und wobei die Ausbuchtungen der einen Feineinschnittwand an gegengleichen Positionen zu den Ausbuchtungen der anderen Feineinschnittwand angeordnet sind.

Ein derartiges Laufstreifenprofil ist aus der JP 2005 329793 A bekannt geworden.

Feineinschnitte dienen beispielsweise bei Nutzfahrzeugreifen dazu, bei nasser Fahrbahn den Wasserfilm zu zertrennen, um bessere Nasseigenschaften dieses Laufstreifens zu erhalten.

Bei PKW-Reifen sind die Feineinschnitte bei Fahrzeugreifen für den Einsatz unter winterlichen Fahrbedingungen ausgebildet und dienen beispielsweise dazu, die Fahreigenschafen auf winterlicher Fahrbahn zu verbessern, indem vermehrt Griffkanten zur Verfügung gestellt werden und indem der in den Feineinschnitten aufgenommene Schnee die Haftung des Reifens durch eine Schnee-Schnee-Verzahnung erhöht.

Üblicherweise weisen Feineinschnitte eine Breite von 0,5 mm bis 3 mm auf.

Aus der US 2012/090749 A1, der US 2011/120610 A1 sowie der JP 2005 262973 A sind Feineinschnitte eines Laufstreifenprofiles bekannt, bei welchen in den Feineinschnittwänden Kanäle durch Ausbuchtungen in der Feineinschnittwand gebildet sind.

Aus der EP 1 073 562 B1 ist ein Laufstreifenprofil mit 3 D-Feineinschnitten bekannt, indem eine Feineinschnittwand Ausbuchtungen aufweist, welche über die Feineinschnittwand verteilt angeordnet sind. Die Ausbuchtungen erweitern das Leervolumen des Feineinschnittes an dieser Stelle. Jedoch weist die andere Feineinschnittwand gegengleiche Materialansammlungen auf, welche beim Betrieb des Laufstreifenprofils in die Ausbuchtungen eingreifen. Hierdurch ist eine Verschränkung der gegenüberliegenden Feineinschnittwände erreicht, wodurch die Profilblöcke bzw. -bänder versteift sind.

Man ist bestrebt, die Fahreigenschaften des Reifens, insbesondere die Wintereigenschaften weiter zu verbessern.

Es ist die Aufgabe der Erfindung, ein Laufstreifenprofil eines Fahrzeugreifens zur Verfügung zu stellen, das sowohl verbesserte Wintereigenschaften als auch verbesserte Nass- und Trockenbremseigenschaften aufweist.

Gelöst wird die Aufgabe, indem die Ausbuchtungen in axialen Reihen beabstandet voneinander angeordnet sind, wobei der Abstand in axialer Richtung zwischen 2 mm und 14 mm, vorzugsweise bei einem Laufstreifenprofil eines PKW-Reifens zwischen 1,5 mm und 4 mm und vorzugsweise bei einem Laufstreifenprofil eines LKW-Reifens zwischen 8 mm und 14 mm, beträgt und dass im Tiefenverlauf der Feineinschnittwand die am nächsten benachbarten Ausbuchtungen beabstandet voneinander in einer von der radialen Richtung abweichenden Richtung verlaufenden Reihe angeordnet sind, wobei diese Reihen vorzugsweise einen Winkel α von 50° bis 70° mit der radialen Richtung einschließen.

Es ist erfindungsgemäß ein Laufstreifenprofil geschaffen, das durch die beidseitig an gegengleichen Position angeordneten Ausbuchtungen ein lokal vergrößertes Leervolumen aufweist, welches auch beim Schließen des Feineinschnittes verbleibt. Die Ausbuchtungen sind derart ausgeführt, dass diese an der Feineinschnittwand beginnend von dieser weg in das Profilelement hinein reicht. Durch diese Anordnungen ist die Anordnung von vielen Ausbuchtungen ermöglicht. Mehrere Ausbuchtungen insbesondere in axialer Richtung, verstärken die Wirkung der Ausbuchtungen, z.B. kann verstärkt durch Kapillareffekte Wasser aufgenommen werden.

Im Durchlauf des Reifens auf der Fahrbahnoberfläche verformen sich die Profilelemente des Laufstreifens. Die Art und Intensität dieser Verformung wird u.a. durch die Geometrie der in diesem Profilelement angeordneten Feineinschnitte bestimmt. Bei dem erfindungsgemäßen Laufstreifen verbleibt während der Verformung immer eine durch die Ausbuchtungen geschaffene Öffnung und Hohlräume der Feineinschnitte. In dieser Öffnung / Hohlraum kann für gute Fahreigenschaften auf winterlicher Fahrbahn Schnee aufgenommen werden, wodurch eine vorteilhafte Schnee-Schnee-Reibung und somit eine vorteilhafte Haftung erreicht ist. Andererseits sind die Öffnungen auf nasser Fahrbahn vorteilhaft, weil Wasser in diesen Öffnungen aufgenommen werden kann. Zudem sind durch die verbleibenden Öffnungen mehr Kanten zur Verfügung gestellt, wodurch verbesserte Trocken- und Nassbremseigenschaften erhalten sind.

"Axiale Richtung" meint die Richtung entlang der Reifenachse.

"Umfangsrichtung" meint die Richtung entlang des Reifenabrollens.

"Radiale Richtung" meint die Richtung vom Reifenmittelpunkt zum Laufstreifen.

"Breite des Feineinschnittes" meint die Ausdehnung eines Feineinschnittes quer zu seiner Längserstreckung.

"Abstand zweier Ausbuchtungen" meint die kürzeste Strecke in radialer oder axialer oder diagonaler Richtung vom Mittelpunkt der einen Ausbuchtung zum Mittelpunkt der anderen Ausbuchtung.

In einer Ausführungsform sind die Ausbuchtungen im Wesentlichen halbkugelförmig oder zylinderförmig. In einer 3D-Betrachtung des Feineinschnittes bilden zwei gegenüberliegende Ausbuchtungen kugel- oder zylinderförmige Hohlräume, welche über die radial verlaufenden Feineinschnittwände hinaus in das Profilelement reichen. Die Hohlräume bleiben auch unter Last erhalten, sind vorteilhaft für die Wasseraufnahme und somit vorteilhaft für die Nasseigenschaften. Ebenfalls kann sich in den Hohlräumen Schnee fangen, wodurch die Schneetraktion vorteilhaft verbessert ist.

In einer anderen Ausführungsform sind die Ausbuchtungen im Wesentlichen pyramidenförmig, wobei die Grundfläche der Pyramide in der Feineinschnittwand angeordnet ist und die Spitze der Pyramide von dem Feineinschnitt weg weisend ausgerichtet ist.

Je nach Wahl der Geometrie der Ausbuchtungen können Vorteile bei der Entformbarkeit oder z.B. einer platzsparenden Anordnung der Ausbuchtungen haben.

Vorteilhaft ist es, wenn die Ausbuchtung eine Breite von 0,6 mm bis 2,4 mm, vorzugsweise bei einem Laufstreifenprofil eines PKW-Reifens zwischen 0,6 mm und 1,6 mm und vorzugsweise bei einem Laufstreifenprofil eines LKW-Reifens zwischen 1,0 mm und 2,4 mm, aufweist.

Vorteilhaft ist es, wenn der Feineinschnitt außerhalb der Ausbuchtungen eine Breite von 0,3 mm bis 1,2 mm, vorzugsweise bei einem Laufstreifenprofil eines PKW-Reifens zwischen 0,3 mm und 0,8 mm, besonders bevorzugt von 0,5 mm und vorzugsweise bei einem Laufstreifenprofil eines LKW-Reifens zwischen 0,5 mm und 1,2 mm aufweist.

Ein derartiges Laufstreifenprofil ist in einem Fahrzeugreifen, vorzugsweise einem Nutzfahrzeugreifen oder einem PKW-Reifen einzusetzen.

Weitere Merkmale, Vorteile und Einzelheiten der Erfindung werden anhand der Zeichnungen, die schematische Ausführungsbeispiele darstellen, näher beschrieben. Dabei zeigt die
- Fig. 1: eine dreidimensionale Darstellung eines Feineinschnittes;
- Fig. 2: eine dreidimensionale Darstellung eines anderen Feineinschnittes;
- Fig. 3: eine dreidimensionale Darstellung eines wiederum anderen Feineinschnittes.

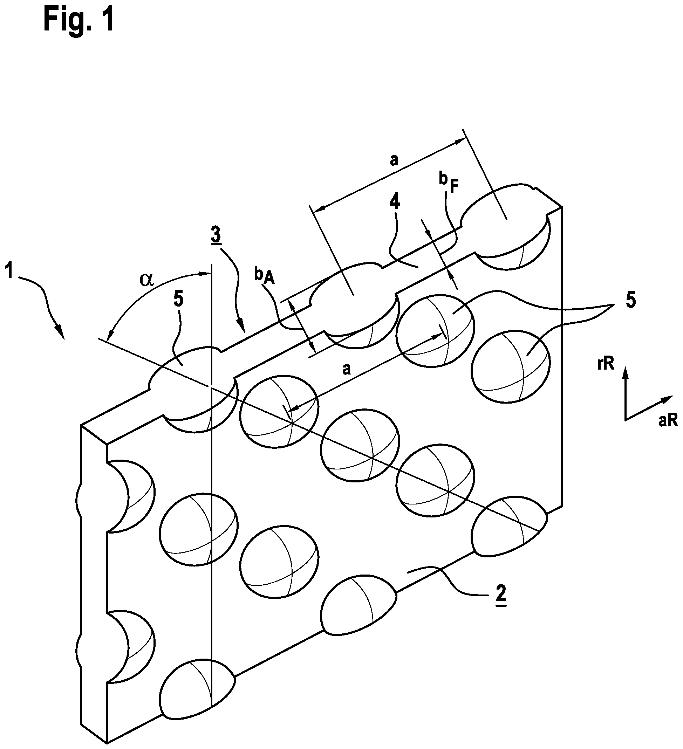

Die **Fig. 1** zeigt eine dreidimensionale Darstellung eines Feineinschnittes 1 des Laufstreifenprofils 1 der Fig. 1. Dargestellt sind die beiden Feineinschnittwände 2, 3, welche zwischen sich ein Leervolumen 4 einschließen. Beide Feineinschnittwände 2, 3 weisen an gegengleichen Positionen Ausbuchtungen 5 auf, welche das Leervolumen des Feineinschnittes an der Stelle der Ausbuchtung 5 erhöhen. Hier sind die Ausbuchtungen 5 halbkugelförmig, so dass zwei gegengleiche Ausbuchtungen 5 "Hohl"-Kugeln ausbilden.

In axialer Richtung aR sind jeweils drei Ausbuchtungen 5 in einer axialen Reihe je Feineinschnittwand 2, 3 angeordnet. Der Abstand a zweier in axialer Richtung aR benachbarter Ausbuchtungen 5 beträgt zwischen 2 mm und 14 mm. Im Tiefenverlauf der Feineinschnittwand sind die am nächsten benachbarten Ausbuchtungen beabstandet voneinander in einer von der radialen Richtung abweichenden Richtung Reihe angeordnet sind, wobei diese Reihen vorzugsweise einen Winkel α von 50° bis 70° mit der radialen Richtung einschließen. Die Ausbuchtung 5 weisen eine Breite b_{A} von 0,6 mm bis 2,4 mm, vorzugsweise bei einem Laufstreifenprofil eines PKW-Reifens zwischen 0,6 mm und 1,6 mm und vorzugsweise bei einem Laufstreifenprofil eines LKW-Reifens zwischen 1,0 mm und 2,4 mm, auf, hier 1,5 mm. Der Feineinschnitt 1 weist außerhalb der Ausbuchtungen eine Breite b_{F} von 0,3 mm bis 1,2 mm, vorzugsweise bei einem Laufstreifenprofil eines PKW-Reifens zwischen 0,3 mm und 0,8 mm, besonders bevorzugt von 0,5 mm und vorzugsweise bei einem Laufstreifenprofil eines LKW-Reifens zwischen 0,5 mm und 1,2 mm auf, hier 0,8 mm.

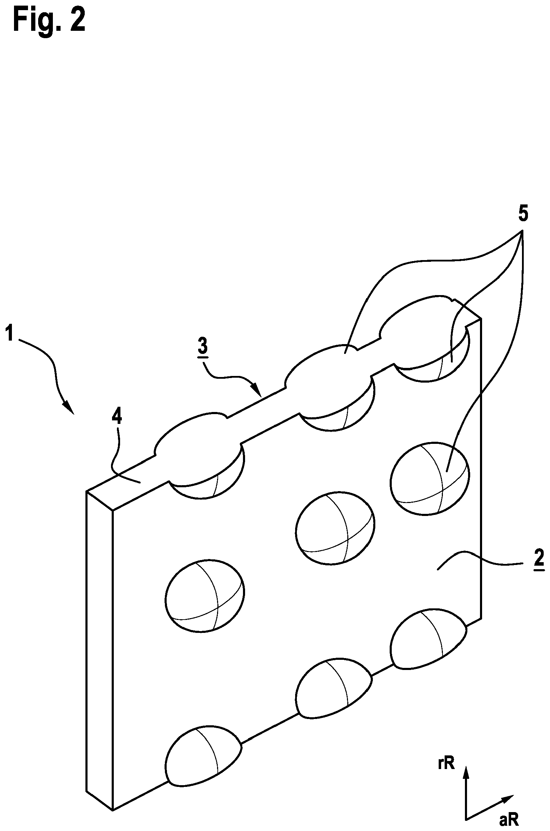

Die **Fig. 2** zeigt eine dreidimensionale Darstellung eines anderen Feineinschnittes 1. Der Feineinschnitt 1 unterscheidet sich von dem Feineinschnitt der Fig. 1 dahingehend, dass - im Tiefenverlauf - die am nächsten benachbarten Ausbuchtungen 5 in radialer Richtung rR angeordnet sind.

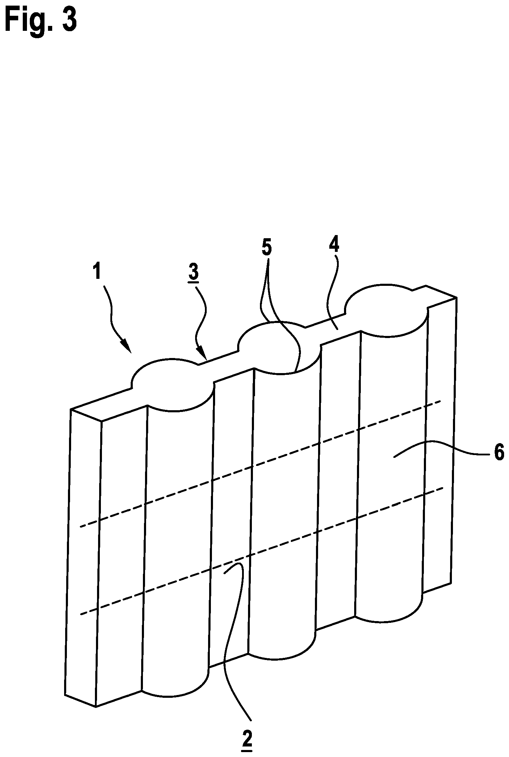

Die **Fig. 3** zeigt eine dreidimensionale Darstellung eines wiederum anderen Feineinschnittes 1. Der Feineinschnitt 1 unterscheidet sich von dem Feineinschnitt der Fig. 2 dahingehend, dass -im Tiefenverlauf - die Ausbuchtungen 5 in radialer Richtung rR derart zueinander angeordnet sind, dass diese ineinander übergehen und radial verlaufende Kanäle 6 bilden, welche vorzugsweise über ihren radialen Verlauf einen gleichen Querschnitt aufweisen.

### Bezugszeichenliste

### (Teil der Beschreibung)

- 1: Feineinschnitt
- 2: Feineinschnittwand
- 3: Feineinschnittwand
- 4: Leervolumen
- 5: Ausbuchtung
- 6: Kanal

- a: Abstand zweier Ausbuchtungen
- b_{A}: Breite Ausbuchtung
- b_{F}: Breite Feineinschnitt

- rR: radiale Richtung
- aR: axiale Richtung
- uR: Umfangsrichtung

## Patentansprüche

1. Laufstreifenprofil eines Fahrzeugreifens mit Profilpositiven wie Profilblöcken oder Laufstreifenbändern, welche Feineinschnitte (1) aufweisen, wobei die Breite eines Feineinschnittes (b_{F}) durch zwei parallel zueinander angeordnete Feineinschnittwände (2, 3) begrenzt ist, welche ein Leervolumen (4) zwischen sich einschließen und wobei die Feineinschnittwände (2, 3) Ausbuchtungen (5) aufweisen, welche das Leervolumen (4) des Feineinschnittes an der Stelle der Ausbuchtung (5) erhöht und welche in axialer Richtung (aR) sowie in radialer Richtung (rR) verteilt an der Feineinschnittwand (2, 3) angeordnet sind, wobei beide Feineinschnittwände (2, 3) Ausbuchtungen (5) aufweisen und wobei die Ausbuchtungen (5) der einen Feineinschnittwand (2) an gegengleichen Positionen zu den Ausbuchtungen (5) der anderen Feineinschnittwand (3) angeordnet sind, **dadurch gekennzeichnet, dass** die Ausbuchtungen (5) in axialen Reihen beabstandet voneinander angeordnet sind, wobei der Abstand (a) in axialer Richtung zwischen 2 mm und 14 mm, vorzugsweise bei einem Laufstreifenprofil eines PKW-Reifens zwischen 1,5 mm und 4 mm und vorzugsweise bei einem Laufstreifenprofil eines LKW-Reifens zwischen 8 mm und 14 mm, beträgt und dass im Tiefenverlauf der Feineinschnittwand (2, 3) die am nächsten benachbarten Ausbuchtungen (5) beabstandet voneinander in einer von der radialen Richtung (rR) abweichenden Richtung verlaufenden Reihe angeordnet sind, wobei diese Reihen vorzugsweise einen Winkel α von 50° bis 70° mit der radialen Richtung (rR) einschließen.

2. Laufstreifenprofil nach Anspruch 1,
**dadurch gekennzeichnet, dass** die Ausbuchtungen (5) im Wesentlichen halbkugelförmig oder zylinderförmig sind.

3. Laufstreifenprofil nach Anspruch 1, **dadurch gekennzeichnet, dass** die Ausbuchtungen (5) im Wesentlichen pyramidenförmig sind, wobei die Grundfläche der Pyramide in der Feineinschnittwand (2, 3) angeordnet ist und die Spitze der Pyramide von dem Feineinschnitt (1) wegweisend ausgerichtet ist.

4. Laufstreifenprofil nach einem oder mehreren der vorangehenden Ansprüche, **dadurch gekennzeichnet, dass** die Ausbuchtung (5) eine Breite (b_{A}) von 0,6 mm bis 2,4 mm, vorzugsweise bei einem Laufstreifenprofil eines PKW-Reifens zwischen 0,6 mm und 1,6 mm und vorzugsweise bei einem Laufstreifenprofil eines LKW-Reifens zwischen 1,0 mm und 2,4 mm, aufweist.

5. Laufstreifenprofil nach einem oder mehreren der vorangehenden Ansprüche, **dadurch gekennzeichnet, dass** der Feineinschnitt (1) außerhalb der Ausbuchtungen eine Breite (b_{F}) von 0,3 mm bis 1,2 mm, vorzugsweise bei einem Laufstreifenprofil eines PKW-Reifens zwischen 0,3 mm und 0,8 mm, besonders bevorzugt von 0,5 mm und vorzugsweise bei einem Laufstreifenprofil eines LKW-Reifens zwischen 0,5 mm und 1,2 mm aufweist.

6. Fahrzeugluftreifen, **dadurch gekennzeichnet, dass** dieser ein Laufstreifenprofil gemäß eines oder mehrerer der vorangehenden Ansprüche aufweist.

7. Fahrzeugluftreifen nach Anspruch 6, **dadurch gekennzeichnet dass** dieser ein Nutzfahrzeugreifen oder ein PKW-Reifen ist.

## Claims

1. Tread profile of a vehicle tyre with profile positives such as profile blocks or tread bars, which have sipes (1), wherein the width of a sipe (b_{F}) is delimited by two sipe walls (2, 3), which are arranged parallel to one another and between them enclose an empty volume (4), and wherein the sipe walls (2, 3) have indentations (5), which increase the empty volume (4) of the sipe at the location of the indentation (5) and are arranged distributed in an axial direction (aR) and in a radial direction (rR) on the sipe wall (2, 3), wherein both sipe walls (2, 3) have indentations (5), and wherein the indentations (5) of the one sipe wall (2) are arranged at corresponding opposite positions to the indentations (5) of the other sipe wall (3), **characterized in that** the indentations (5) are arranged spaced apart from one another in axial rows, wherein the spacing (a) in the axial direction is between 2 mm and 14 mm, preferably in the case of a tread profile of a car tyre between 1.5 mm and 4 mm and preferably in the case of a tread profile of a truck tyre between 8 mm and 14 mm, and **in that** in the depth profile of the sipe wall (2, 3), the indentations (5) that are most closely adjacent are arranged spaced apart from one another in a row that runs in a direction deviating from the radial direction (rR), wherein these rows preferably form an angle α of 50° to 70° with the radial direction (rR).

2. Tread profile according to Claim 1, **characterized in that** the indentations (5) are substantially hemispherical or cylindrical.

3. Tread profile according to Claim 1, **characterized in that** the indentations (5) are substantially pyramidal, wherein the base area of the pyramid is arranged in the sipe wall (2, 3) and the tip of the pyramid is aligned pointing away from the sipe (1).

4. Tread profile according to one or more of the preceding claims, **characterized in that** the indentation (5) has a width (b_{A}) of 0.6 mm to 2.4 mm, preferably in the case of a tread profile of a car tyre between 0.6 mm and 1.6 mm and preferably in the case of a tread profile of a truck tyre between 1.0 mm and 2.4 mm.

5. Tread profile according to one or more of the preceding claims, **characterized in that** the sipe (1) has outside the indentations a width (b_{F}) of 0.3 mm to 1.2 mm, preferably in the case of a tread profile of a car tyre between 0.3 mm and 0.8 mm, particularly preferably of 0.5 mm, and preferably in the case of a tread profile of a truck tyre between 0.5 mm and 1.2 mm.

6. Pneumatic vehicle tyre, **characterized in that** it has a tread profile according to one or more of the preceding claims.

7. Pneumatic vehicle tyre according to Claim 6, **characterized in that** it is a commercial vehicle tyre or a car tyre.

## Revendications

1. Sculpture de bande de roulement d'un pneumatique de véhicule avec des positifs de sculpture, comme des blocs de sculpture ou des bandes de bande de roulement, qui présentent de fines entailles (1), dans laquelle la largeur d'une fine entaille (b_{F}) est limitée par deux parois de fine entaille (2, 3) disposées parallèlement l'une à l'autre, qui enferment entre elles un volume de vide (4) et dans laquelle les parois de fine entaille (2, 3) présentent des renflements (5), qui augmentent le volume de vide (4) de la fine entaille à l'endroit du renflement (5) et qui sont disposés de façon répartie en direction axiale (aR) ainsi qu'en direction radiale (rR) sur la paroi de fine entaille (2, 3), dans laquelle les deux parois de fine entaille (2, 3) présentent des renflements (5) et dans laquelle les renflements (5) d'une paroi de fine entaille (2) sont disposés en des positions identiques opposées aux renflements (5) de l'autre paroi de fine entaille (3), **caractérisée en ce que** les renflements (5) sont disposés en rangées axiales à distance l'un de l'autre, dans laquelle la distance (a) en direction axiale vaut entre 2 mm et 14 mm, de préférence pour une sculpture de bande de roulement d'un pneumatique de voiture entre 1,5 mm et 4 mm et de préférence pour une sculpture de bande de roulement d'un pneumatique de camion entre 8 mm et 14 mm, et en termes d'allure de la profondeur de la paroi de fine entaille (2, 3) les renflements (5) voisins les plus proches sont disposés à distance l'un de l'autre en une rangée s'étendant dans une direction s'écartant de la direction radiale (rR), dans laquelle ces rangées forment de préférence un angle α de 50° à 70° avec la direction radiale (rR).

2. Sculpture de bande de roulement selon la revendication 1, **caractérisée en ce que** les renflements (5) sont essentiellement de forme hémisphérique ou de forme cylindrique.

3. Sculpture de bande de roulement selon la revendication 1, **caractérisée en ce que** les renflements (5) sont essentiellement de forme pyramidale, dans laquelle la face de base de la pyramide est disposée dans la paroi de fine entaille (2, 3) et la pointe de la pyramide est orientée en s'éloignant de la fine entaille (1) .

4. Sculpture de bande de roulement selon une ou plusieurs des revendications précédentes, **caractérisée en ce que** le renflement (5) présente une largeur (b_{A}) de 0,6 mm à 2,4 mm, de préférence dans une sculpture de bande de roulement d'un pneumatique de voiture entre 0,6 mm et 1,6 mm et de préférence dans une sculpture de bande de roulement d'un pneumatique de camion entre 1,0 mm et 2,4 mm.

5. Sculpture de bande de roulement selon une ou plusieurs des revendications précédentes, **caractérisée en ce que** la fine entaille (1) présente en dehors des renflements (5) une largeur (b_{F}) de 0,3 mm à 1,2 mm, de préférence dans une sculpture de bande de roulement d'un pneumatique de voiture entre 0,3 mm et 0,8 mm, de préférence encore de 0,5 mm et de préférence dans une sculpture de bande roulement d'un pneumatique de camion entre 0,5 mm et 1,2 mm.

6. Pneumatique de véhicule, **caractérisé en ce qu'**il présente une sculpture de bande de roulement selon une ou plusieurs des revendications précédentes.

7. Pneumatique de véhicule selon la revendication 6, **caractérisé en ce qu'**il est un pneumatique de véhicule utilitaire ou un pneumatique de camion.
